# EUROPEAN PATENT APPLICATION

(11) **EP 3 396 493 A1**
(43) Date of publication of application: **31.10.2018**
(21) Application number: 17168697.5
(22) Date of filing: 28.04.2017
(51) Int. Cl.: G06F 3/01, A41D 1/00, G06F 3/03, A41D 27/20, G08B 25/01

(54) **SYSTEM FOR INTERACTING WITH A DEVICE THROUGH SIMPLE ACTIONS OF A USER**

(71) Applicant: Siemens Aktiengesellschaft, 80333 München (DE)
(72) Inventor: Hartmann, Norman, 80469 München (DE); Johnson, Rebecca, 81825 München (DE); Krüger, Thorsten, 83627 Warngau (DE); MacWilliams, Asa, 82256 Fürstenfeldbruck (DE); Sauer, Markus, 81739 München (DE)

(57) **Abstract**

A system for interacting with a target device, to perform a desired function thereon, includes a wearable interaction unit that has an outer covering, an interaction element, a processor, and a wireless communication interface. The system also includes a base station that has a communication component and a processing component. The outer covering, when attached to the user, form a pocket on the user, at least partially within which the interaction element is positioned. On receiving a user action, the interaction element generates a signal. The processor based on the signal generates a request that is transmitted by the wireless communication interface to the communication component. Subsequently, a command corresponding to the request is generated by the processor component, and is communicated via the communication component to the target device. The command is instructive of performance of the desired function by the target device.

## Description

The present technique relates to systems for interacting with devices through simple actions of a user.

In the modern era of technology, proliferation of machines is ever increasing. System engineers and designers constantly strive to find simple ways through which a human can interact with a machine or device. The objective of such endeavors is to increase user friendliness in human-machine interaction. However owing to the complexity of machines and the capabilities incorporated in machines to perform several functions, the interaction with machines or devices is becoming increasingly complex. Although many a times a user of such a device or machine may be using the device for performing routine functions or simple operations, still the user needs to interact with complex input mechanisms on such devices, such as keyboards, control panels with multiple buttons or switches, densely populated touch based user interface with multiple tabs displayed to the user, etc. Navigating through such complex input mechanism requires the user to be well versed with operating such complex input mechanism. Even when well versed such navigation is time consuming and often lead to confusion to the user. Furthermore, the user is required to be concentrated on the complex input mechanism and often needs to interact physically with the user interface, and this may be difficult when the user is also performing other tasks simultaneously.

Some examples of function that a user may wish to perform, without physically interacting with the device on which the user wishes to perform these functions and without having to be attentive to the input mechanism on such a device may be, a service technician who wishes to bring up his workflow information, construction diagrams or current sensor data onto a head-mounted display; a machine operator, who wishes to put a machine into a particular operation mode without having to navigate through the HMI (human-machine interface) display; an assembly worker, who wishes to put her current work order onto a display next to the work station she has just selected; a traveler at a public transit station, who wishes to bring up his current route or timetable onto a public information kiosk; a speaker at a conference, who wishes to bring her presentation onto a projection screen; and so on and so forth. In a nutshell, a user may desire to quickly and easily bring up a specific piece of information on a digital display, without using a complex selection/navigation/browsing of UI on that display; or activate a specific program or operation mode on a machine, without using a complex operation UI on the machine; and without having to look at any other intermediate interaction device such as a remote control for the device.

One way to obviate the requirement of physical interaction with the input mechanism of the device and/or the requirement to navigate through complex user interface and/or the requirement to look at the user interface of the device or any other intermediate interaction device such as a remote control for the device may be by using voice commands. However, voice based operation of such a device may be difficult in certain conditions such as when the user is functioning in a noisy environment, such as in a manufacturing facility, an assembly line, a public kiosk, a construction site, etc. The voice based operation has other disadvantages, for example it can cause disturbance to other people present in the surrounding, the machine may not be able to recognize the user's voice or pronunciations, and so on and so forth. Another way is to equip the devices with gesture sensing arrangements that can recognize user's contactless gestures but such gesture sensing arrangements often need complex modifications of the device, and may still be prone to failure as the gestures made by the user or different users may differ from time to time.

Thus there exists a need for a technique for interacting with a device through simple actions of a user, and without requiring physical interaction with the input mechanism of the device and/or navigation through complex user interface of the device and/or looking at the user interface of the device or any other intermediate interaction device. Furthermore, such a technique is desired to be free of disadvantages of the voice based user interaction and/or of gesture sensing based user interaction.

Therefore, it is an object of the present invention to provide a technique for interacting with a target device through simple actions of a user, that are not required to be physical performed on the input mechanism of the device. The technique is desired to not require navigation through complex user interface of the device. Furthermore, the user should be able to interact with the device without looking at the user interface of the device or any other intermediate interaction device. The present technique should be free of disadvantages of the voice based user interaction and/or of the gesture sensing based user interaction.

The abovementioned objects are achieved by a system for interacting with a target device to perform a desired function on the target device according to claim 1 of the present technique. Advantageous embodiments of the present technique are provided in dependent claims.

In the present technique, a system for interacting with a target device to perform a desired function on the target device is presented. The system functions such that a user desiring to operate the target device i.e. desiring to perform the desired function on the target device does not need to interact physically with the target device. The system includes a wearable interaction unit and a base station.

The wearable interaction unit includes an outer covering, a first interaction element, a processor, a wireless communication interface, and optionally a data storage element. The outer covering may be formed of fabric, polymer sheet, or leather or their equivalents. The outer covering is attached to the user to form a pocket on the user. The first interaction element is positioned at least partially within the pocket and receives a first user action, for example the first interaction element may be like a tag and the first user action may be a pull or tug performed by the user on the first interaction element. As a result of the first user action received by the first interaction element, the first interaction element generates a first signal corresponding to the first user action. The processor receives the first signal from the first interaction element and consequently generates a first request. The wireless communication interface, thereafter, transmits the first request to the base station.

The base station includes a communication component, a processing component and optionally a data storage component. The communication component receives wirelessly the first request transmitted by the wireless communication interface of the interaction unit. The first request is conveyed to the processor component, which then subsequently generates a first command corresponding to the first request. The communication component communicates the first command to the target device. The base station interacts with the target device through the first command. The first command is instructive of performance of the desired function by the target device.

Thus the user is able to perform the desired function on the target device, for example displaying of a specific data on a display of a target device, without requiring performance of any physical interaction with the target device. Instead, the user performs a simple action, i.e. the first user action for example a pull on the first interaction element, and the simple action results in the specific data being displayed on the target device. The first command generated by the processor component is comprises instructions that lead the target device to perform the desired task. The processor component of the base station is required to be programmed accordingly.

In an embodiment of the system, the communication component of the base station wirelessly communicates the first command to the target device. Thus target device is required to have a wireless receiver integrated therein or to have a port wherein a wireless receiver may subsequently be installed prior to communicating the first command to the target device.

In another embodiment of the system, communication component of the base station includes a wireless communication component and a wired communication component. The wireless communication component receives the first request transmitted by the wireless communication interface of the interaction unit. The wired communication component communicates the first command to the target device by direct connection, for example by connecting through a data cable.

In another embodiment of the system, the outer covering includes an attachment mechanism. By using the attachment mechanism, the outer covering is attached onto the user, for example on clothing of the user, thereby forming the pocket on the user.

In another embodiment of the system, the base station is integrated in a mobile device, for example in a smart phone, tablet, laptop, etc. Since the mobile devices generally include a processor, a wireless receiver, a wireless transmitter or a possibility to establish connection with another device using a data cable, and optionally a memory, such mobile devices may easily be programmed to function as the base station. Therefore making the system cost effective by obviating the need for a separate base station.

In another embodiment of the system, the interaction unit includes a feedback element that provides haptic or acoustic feedback to the user. Thus the user is made aware that the user action was received by the interaction unit.

In another embodiment of the system, the processor is configured such that the first request generated by the processor includes information for recognizing the target device on which the desired function is to be performed. Thus different interaction units may be programmed to recognize and act on specified or predetermined target device.

In another embodiment of the system, the interaction unit includes a data storage element. The data storage element stores data, for example programs to generate the requests, and/or to recognize the target device, and to store any other data or information that may be received by the interaction unit from the base station and/or from the target device.

In another embodiment of the system, the first interaction element of the interaction unit receives a second user action and generates a second signal corresponding to the second user action. The second user action is distinct from the first user action, for example the first user action may be a pull whereas the second user action may be a push. The processor of the interaction unit receives the second signal from the first interaction element and consequently generates a second request. The wireless communication interface of the interaction unit transmits the second request. The communication component of the base station receives the second request. The processor component of the base station generates a second command corresponding to the second request. The communication component communicates the second command to the target device, wirelessly or by direct connection. The second command is instructive of performance of requesting, receiving and storing of desired data from the target device into the data storage element of the interaction unit. Thus, in addition to the fact, that the user performs the simple action, i.e. the first user action for example a pull on the first interaction element, the user can perform another simple action, i.e. the second user action for example a push or twist on the first interaction element, and the second user action results in a request to the target device to transmit specific data from the target device. The second command generated by the processor component comprises instructions that lead the target device to transmit the desired data which is then stored on the data storage element, after being transmitted from the target device to the base station and then to the interaction unit. The processor component of the base station is required to be programmed accordingly.

In an alternative embodiment of the system, the system includes a second interaction element. The second interaction element is positioned at least partially within the pocket and receives a second user action, for example the second interaction element may be like a tag and the second user action may be a pull or tug performed by the user on the second interaction element. As a result of the second user action received by the second interaction element, the second interaction element generates a second signal corresponding to the second user action. The processor receives the second signal from the second interaction element and consequently generates a second request. The wireless communication interface, thereafter, transmits the second request to the base station.

The communication component of the base station receives the second request. The processor component of the base station generates a second command corresponding to the second request. The communication component communicates the second command to the target device, wirelessly or by direct connection. The second command is instructive of performance of requesting, receiving and storing of desired data from the target device into the data storage element of the interaction unit. Thus, in addition to the fact, that the user performs the first user action for example a pull on the first interaction element, the user can perform another simple action, i.e. the second user action for example a pull or a push or twist on the second interaction element, and the second user action results in a request to the target device to transmit specific data from the target device. The second command generated by the processor component comprises instructions that lead the target device to transmit the desired data which is then stored on the data storage element, after being transmitted from the target device to the base station and then to the interaction unit. The processor component of the base station is required to be programmed accordingly.

In the system of the present technique, the first interaction element may be configured to receive the first user action emulating one or more pulls on the first interaction element in a direction towards outside of the pocket. Additionally, the first interaction element may be configured to receive the second user action also emulating one or more pull on the first interaction element in a direction towards outside of the pocket. However, the first interaction element is configured such that a number of pulls on the first interaction element to generate the first signal is different from a number of pulls on the first interaction element to generate the second signal.

The present technique is further described hereinafter with reference to illustrated embodiments shown in the accompanying drawing, in which:
- FIG 1: schematically represent an exemplary embodiment of a system of the present technique depicted in relation to a user of the system and a target device on which the system is operable;
- FIG 2: schematically represents an exemplary embodiment of an interaction unit of the system of FIG 1 depicting a scheme of arrangement of components of the interaction unit with respect to the user;
- FIG 3: schematically represents another exemplary embodiment of the system of the present technique having a first interaction element;
- FIG 4: schematically represents another exemplary embodiment of the system of the present technique having a second interaction element in addition to the first interaction element of FIG 3; and
- FIG 5: schematically represents yet another exemplary embodiment of the system of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", etc. are used herein only to facilitate discussion, and carry no particular temporal or chronological significance unless otherwise indicated.

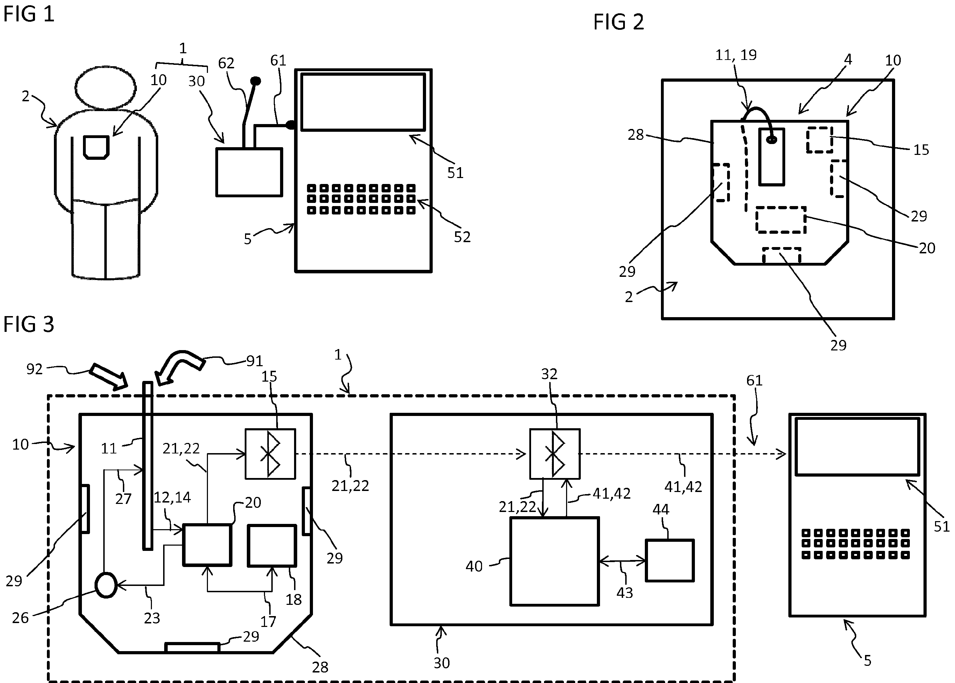

A system 1 of the present technique is explained with respect to FIGs 1, 2 and 3. FIG 1 represents an exemplary embodiment of the system 1 in relation to a user 2 of the system 1 and a target device 5 on which the system 1 is operable. The system 1 is for interacting with the target device 5 with an objective to perform a desired function on the target device 5. The target device 5, hereinafter also referred to as the device 5, may include a digital display 51 and an input mechanism 52, such as a keyboard or switch panel.

The system 1 functions such that the user 2 desiring to operate the target device 5 i.e. desiring to perform the desired function on the target device 5 does not need to interact physically with the target device 5, i.e. with the display 51 and/or with the input mechanism 52, or to look at the target device 5, i.e. at the display 51 and/or at the input mechanism 52, or at any other intermediate interaction unit such as a remote control of the target device 5.

Some examples of function that the user 2 may wish to perform on the target device 5 may be, but not limited to, a service technician 2 who wishes to bring up his workflow information, construction diagrams or current sensor data onto a head-mounted display 5; a machine operator 2, who wishes to put a machine 5 into a particular operation mode; an assembly worker 2, who wishes to put her current work order onto a display 5 next to her work station; a traveler 2 at a public transit station, who wishes to bring up his current route or timetable onto a public information kiosk 5; a speaker 2 at a conference, who wishes to bring her presentation onto a projection screen 5; and so on and so forth. In a nutshell, the user 2 may desire to bring up a specific piece of information on a digital display 5, wherein bringing up of the specific piece of information on the digital display 5 is the desired function; and/or the user 2 may desire to activate a specific program or operation mode on a machine 5, wherein activation of the specific program or operation mode on the machine 5 is the desired function, and/or the user 2 may desire to obtain and store a specific piece of information from a machine 5 or a digital display 5, wherein obtaining and storing of the specific piece of information is the desired function.

As shown in FIG 1 in combination with FIG 2, the system 1 includes a wearable interaction unit 10 and a base station 30. In use the interaction unit 10 is positioned on the user 2, for example on clothing of the user 2. The base station 30 is positioned in connection with the device 5. A connection 61 of the base station 30 with the device 5 may be a direction physical connection such as via a cable for example a data cable, or may be wireless, for example using Bluetooth or WiFi. The base station 30 may also establish connection 62 with other similar or different device (not shown), and may function with respect to the other device in accordance with the present technique.

The wearable interaction unit 10, hereinafter also referred to as the interaction unit 10 or to simply as the unit 10, includes an outer covering 28, as shown in FIG 2. The outer covering 28 is such that when the outer covering 28 is attached to the user 2, for example to an article of clothing of the user 2, the outer covering 28 forms a pocket 4 on the user 2. The outer covering 28 may be made of fabric, polymer sheet, leather and/or their equivalents, thus when the outer covering 28 is attached onto the user 2, the pocket 4 formed emulates a pocket of the article of clothing. The outer covering 28 may be attached to the user 2 by any method of attachment for example by sewing or sticking the outer covering 28 to the user 2, i.e. by integrally fixing the outer covering 28 to the article of clothing of the user 2.

Alternatively, the outer covering 28 may include one or more attachment mechanism 29 with help of which the outer covering 28 is attached or positioned on the user 2. The attachment mechanism 29 may be, but not limited to, an adhesive strip e.g. made from reusable glue, one of the two components of a Hook-and-loop fastener while other of the two component of the Hook-and-loop fastener is located on the user, slidingly engaging mechanism which can be slid into a corresponding receiving mechanism on the user, a separating zipper having its counterpart located on the user, a hook-and-eye closure part with counterpart located on the user, a button based or clip based arrangement, a belt based attachment mechanism, and so on and so forth. With the attachment mechanism 29, the outer covering 28 may be removably attached to the user 2, i.e. the outer covering 28 may be attached and then removed and then reattached to the same or another user 2, and so on and so forth. As shown in FIG 2, when attached, the outer covering 28 forms the pocket 4, and the other components of the interaction unit 10 are positioned at least partially within the pocket 4. The components of the interaction unit 10 are positioned with respect to the user 2 as if the components have been put in the pocket 4. Multiple interaction units 10 may be attached to the user 2 similarly, and each interaction unit 10 may function with the same or different base stations 30.

As shown in FIG 3 in combination with FIG 2, the interaction unit 10, besides the outer covering 28 and the optional attachment mechanism 29, includes a first interaction element 11, a processor 20, a wireless communication interface 20, and optionally a data storage element 18. The first interaction element 11, hereinafter also referred to as the element 11, is positioned at least partially within the pocket 4. The element 11 for example may be, but not limited to, a tag 19 e.g. a short cloth tab sticking out that can be pulled on.

The element 11 is configured to receive a first user action 91, for aforementioned example where the element 11 is tag shaped, the first user action 91 may be a pull or tug performed by the user 2 on the tag 19 i.e. on the element 11. As a response to the first user action 91 received by the element 11, the element 11 generates a first signal 12. The first signal 12 corresponds to the first user action 91 i.e. the first signal 12 is only generated as a result of the first user action 91. The processor 20 receives the first signal 12 from the element 11 and consequently generates a first request 21 that is transmitted wirelessly by the wireless communication interface 15, for example by Bluetooth or WiFi. The wireless communication interface 15 may be a wireless transmitter, and preferably also a wireless receiver.

The first request 21 transmitted by the interaction unit 10, i.e. by the wireless communication interface 15 of the unit 10 is received by base station 30. The base station 30 includes a communication component 32, a processing component 40 and optionally a data storage component 44. The communication component 32 wirelessly receives the first request 12 transmitted by the wireless communication interface 15 of the interaction unit 10. The first request 21 so received is conveyed to the processor component 40, which then subsequently generates a first command 41 corresponding to the first request 21. Thereafter, the communication component 32 communicates the first command 41 to the target device 5, for example by a simple binary input mechanism (not shown) on the device 5. The communication component 32 communicates the first command 41 to the target device 5 either by a wired connection e.g. by using a data cable inserted into a USB port of the device 5, or wirelessly e.g. by using Bluetooth or WiFi technologies.

Optionally, in an event where the base station 30 is interacting with or is capable of interacting with multiple target devices 5, the processor 20 is configured such that the first request 21 generated by the processor 20 includes information for recognizing the target device 5 on which the desired function is to be performed.

The optional data storage element 18 stores data, if any and if so required, for example programs to generate the first request 21, and/or to indications to recognize the target device 5, and/or to store any other data or information that may be received by the interaction unit 10 from the base station 30 and/or from the target device 5 and/or the user 2. The data storage element 18 is connected via a connection 17 to the processor 20, which may access the data storage element 18 to store or retrieve any information from the data storage element 18. Similarly, the optional data storage component 44 stores data, if any and if so required, for example programs to generate the first command 41, and/or to store any other data or information that may be received by the base station 30 from the interaction unit 10 and/or from the target device 5 and/or the user 2. The data storage component 44 is connected via a connection 43 to the processor component 40, which may access the data storage component 44 to store or retrieve any information from the data storage component 44.

Therefore, as aforementioned, base station 30 interacts with the device 5 through the first command 41. The first command 41 is instructive of performance of the desired function by the device 5. In other words, the first command 41 is a directive to the target device 5 to perform a specific task, which is the desired function, and the specific task is triggered or initiated or performed when the first command 41 is received by the target device 5.

As shown in FIG 3, the element 11 may also be configured to receive a second user action 92, for aforementioned example where the element 11 is tag shaped, the second user action 92 may also be a pull or tug performed by the user 2 on the tag 19 i.e. on the element 11, but a number of pulls for the second user action 92 is different as compared to a number of pulls for the first user action 91. As a response to the second user action 92 received by the element 11, the element 11 generates a second signal 14. The second signal 14 corresponds to the second user action 92 i.e. the second signal 14 is only generated as a result of the second user action 92. The processor 20 receives the second signal 14 from the element 11 and consequently generates a second request 22 that is transmitted wirelessly by the wireless communication interface 15, for example by Bluetooth or WiFi.

The second request 22 transmitted by the interaction unit 10, i.e. by the wireless communication interface 15 of the unit 10 is received by base station 30. The second request 22 so received is conveyed to the processor component 40, which then subsequently generates a second command 42 corresponding to the second request 22. Thereafter, the communication component 32 communicates the second command 42 to the target device 5, similar to communicating the first command 41.

Optionally, in an event where the base station 30 is interacting with or is capable of interacting with multiple target devices 5, the processor 20 is configured such that the second request 22 generated by the processor 20 includes information for recognizing the target device 5 on which the desired function is to be performed.

The data storage element 18 stores data, if any and if so required, for example programs to generate the second request 22. Similarly, the data storage component 44 stores data, if any and if so required, for example programs to generate the second command 42.

Therefore, as aforementioned, base station 30 may also interact with the device 5 through the second command 42. The second command 42 is instructive of performance of requesting, receiving and storing of desired data from the target device 5 into the data storage element 18 of the interaction unit 10. In other words, the second command 42 is a directive to the target device 5 to send specific data or data being displayed at the moment when the second user action 92 is performed to the system 1. The sending of the requested data or information from the device 5 is triggered or initiated or performed when the second command 42 is received by the target device 5. The data then travels from the device 5 to the communication component 32 and from there to the wireless communication interface 15 and finally is stored in the data storage element 18.

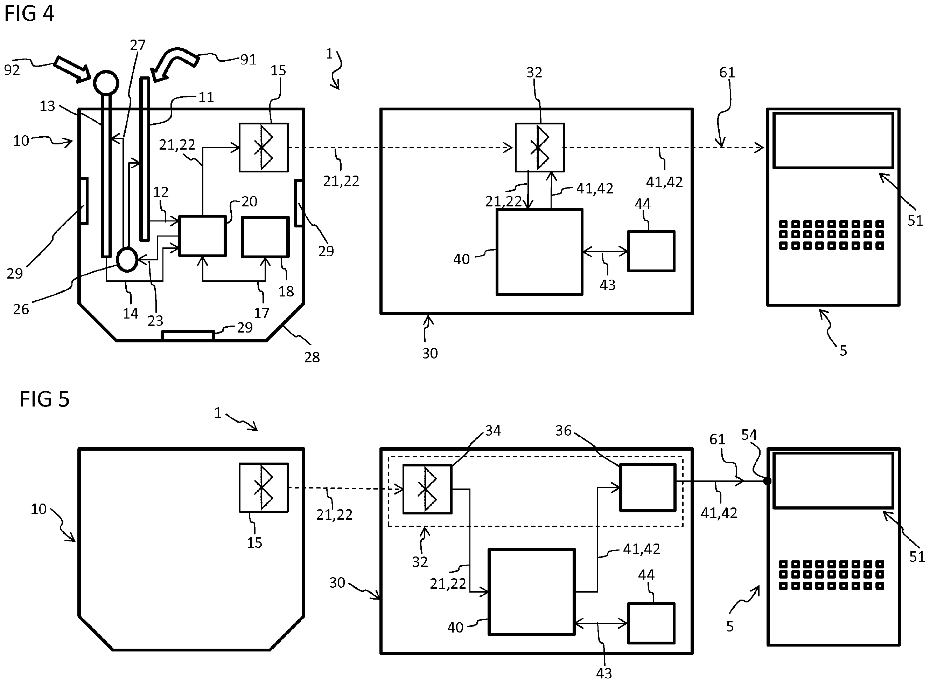

Hereinafter another embodiment of the system 1 and its functioning is explained with reference to FIG 4, in combination with FIGs 1 and 3. In this embodiment of the system 1, the unit 10 includes two interaction elements, namely the first interaction element 11 and a second interaction element 13, hereinafter also referred to the element 13. The element 13 is shaped such that the user 2 is able to distinguish the element 11 and the element 13 from each other by touching the elements 11, 13, and may or may not look at the elements 11, 13. For example when the element 11 is the tag 19 as shown in FIG 2, the element 13 may be a pushbutton sewn into the outer covering 28 or may be a tag which differs in shape and size from the tag 19 such that the difference is clearly perceivable by touching or feeling the elements 11, 13 and does not require visual inspection.

In this embodiment of the system 1, the element 11 is same as the element 11 with respect to the first user action 91 explained hereinabove with reference to FIG 3, and thus has not been explained again hereinafter for sake of brevity. The element 11 in this embodiment is not configured to receive the second user action 92.

As shown in FIG 4, in this embodiment of the system 1, the second element 13 is configured to receive a second user action 92. The second user action 92 may be a pull or tug performed by the user 2 on the element 13. As a response to the second user action 92 received by the element 13, the element 13 generates a second signal 14. The second signal 14 corresponds to the second user action 92 i.e. the second signal 14 is only generated as a result of the second user action 92. The processor 20 receives the second signal 14 from the element 13 and consequently generates a second request 22 that is transmitted wirelessly by the wireless communication interface 15, for example by Bluetooth or WiFi.

The second request 22 transmitted by the interaction unit 10, i.e. by the wireless communication interface 15 of the unit 10 is received by base station 30, and subsequently conveyed to the processor component 40, which then consequently generates a second command 42 corresponding to the second request 22. Thereafter, the communication component 32 communicates the second command 42 to the target device 5, similar to communicating the first command 41.

Optionally, the second request 22 generated by the processor 20 includes information for recognizing the target device 5 on which the desired function is to be performed. The data storage element 18 stores data, if any and if so required, for example programs to generate the second request 22. Similarly, the data storage component 44 stores data, if any and if so required, for example programs to generate the second command 42.

Therefore, as aforementioned, base station 30 may also interact with the device 5 through the second command 42 which originated as a result of the second user action 92 exercised on the second interaction element 13 of the unit 10. The second command 42 is instructive of performance of requesting, receiving and storing of desired data from the target device 5 into the data storage element 18 of the interaction unit 10. In other words, the second command 42 is a directive to the target device 5 to send specific data or data being displayed at the moment when the second user action 92 is performed to the element 13. The sending of the requested data or information from the device 5 is triggered or initiated or performed when the second command 42 is received by the target device 5. The data then travels from the device 5 to the communication component 32 and from there to the wireless communication interface 15 and finally is stored in the data storage element 18.

In a further embodiment of the system 1, as shown in FIGs 3 and 4, the unit 10 may include a feedback element 26 that provides a haptic or an acoustic feedback 27 to the user 2 when the user action 91, 92 was received by the interaction unit 10. The feedback element 26 may be for example a buzzer, a beeper, a mechanical vibrator, etc. When the feedback 27 is haptic the feedback 27 may be communicate to the user 2 via the element 11, 13 through which the user 2 had provided the user action 91, 92. The processor 20 generates a signal activating the feedback element 26 when the signal 12, 14 is received by the processor 20.

FIG 5 presents another embodiment of the system 1. This embodiment of the system 1 may be understood in combination with the embodiments of the system 1 explained hereinabove with respect to FIGs 3 and 4. In this embodiment of the system 1, the communication component 32 of the base station 30 includes a wireless communication component 34 and a wired communication component 36. The wireless communication component 32 receives the first request 21 and/or the second request 22 transmitted by the wireless communication interface 15 of the interaction unit 10. The wired communication component 36 communicates the first command 41 and/or the second command 42 to the target device 5 by direct connection, for example by connecting through a data cable to an input port 54 on the device 5, such as a USB port 54.

In another embodiment of the system 1, the base station 30 is integrated in a mobile device (not shown), for example in a smart phone, tablet, laptop, etc. In this embodiment of the system 1, a processor of the mobile device functions as the processor component 44, a wireless receiver of the mobile device functions as the wireless communication interface 34, and a wireless transmitter of the mobile device may function to communicate the commands 41, 42 of the communication component 32, and an internal or inserted memory of the mobile device may function as the data storage component 44.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and of this invention. The scope of the invention is, therefore, indicated by the following claims rather than by the foregoing description. All changes, modifications, and variations coming within the meaning and range of equivalency of the claims are to be considered within their scope.

## Claims

1. A system (1) for interacting with a target device (5) to perform a desired function on the target device (5), the system (1) comprising a wearable interaction unit (10) and a base station (30),
- wherein the wearable interaction unit (10) comprises:
- an outer covering (28) configured to be attached to a user (2) to form a pocket (4) on the user (2),
- a first interaction element (11) configured to be positioned at least partially within the pocket (4) so formed and to receive a first user action (91) and to generate a first signal (12) corresponding to the first user action (91),
- a processor (20) configured to receive the first signal (12) from the first interaction element (11) and to generate consequently a first request (21), and
- a wireless communication interface (15) configured to transmit the first request (21) to the base station (30); and
- wherein the base station (30) is configured to interact with the target device (5), the base station (30) comprising:
- a communication component (32) configured to receive wirelessly the first request (21) transmitted by the wireless communication interface (15) of the interaction unit (10), and
- a processor component (40) configured to generate a first command (41) corresponding to the first request (21), wherein the communication component (32) is further configured to communicate the first command (41) to the target device (5);
- wherein the first command (41) is instructive of performance of the desired function by the target device (5).

2. The system (1) according to claim 1, wherein the communication component (32) of the base station (30) is configured to wirelessly communicate the first command (41) to the target device (5).

3. The system (1) according to claim 1, wherein the communication component (32) of the base station (30) comprises:
- a wireless communication component (34) configured to receive the first request (21) transmitted by the wireless communication interface (15) of the interaction unit (10), and
- a wired communication component (36) configured to communicate the first command (41) to the target device (5) by direct connection.

4. The system (1) according to any of claims 1 to 3, wherein the outer covering (28) comprises an attachment mechanism (29) configured to attach the outer covering (28) of the wearable interaction unit (10) onto the user (2).

5. The system (1) according to any of claims 1 to 4, wherein the outer covering (28) is one of fabric like, polymer sheet like or leather like.

6. The system (1) according to any of claims 1 to 5, wherein the first interaction element (11) is shaped like a tag (19).

7. The system (1) according to any of claims 1 to 6, wherein the base station (30) is integrated in a mobile device.

8. The system (1) according to any of claims 1 to 7, wherein the base station (30) comprises a data storage component (44).

9. The system (1) according to any of claims 1 to 8, wherein the interaction unit (10) comprises a feedback element (26) configured to provide haptic or acoustic feedback (27) to the user (2).

10. The system (1) according to any of claims 1 to 9, wherein the first request (21) includes information for recognizing the target device (2) on which the desired function is to be performed.

11. The system (1) according to any of claims 1 to 10, wherein the interaction unit (10) comprises a data storage element (18) configured to store data.

12. The system (1) according to any of claims 1 to 11, wherein:
- the first interaction element (11) of the interaction unit (10) is configured to receive a second user action (92) to generate a second signal (14) corresponding to the second user action (92), wherein the second user action (92) is distinct from the first user action (91);
- the processor (20) of the interaction unit (10) is configured to receive the second signal (14) from the first interaction element (11) and to generate consequently a second request (22);
- the wireless communication interface (15) of the interaction unit (10) is configured to transmit the second request (22);
- the communication component (32) of the base station (30) is configured to receive the second request (22);
- the processor component (40) of the base station (30) is configured to generate a second command (42) corresponding to the second request (22); and
- the communication component (32) is configured to communicate the second command (42) to the target device (5), wirelessly or by direct connection;
wherein the second command (42) is instructive of performance of requesting, receiving and storing of desired data from the target device (5) into the data storage element (18) of the interaction unit (10).

13. The system (1) according to any of claims 1 to 11, wherein:
- the interaction unit (10) comprises a second interaction element (13) configured to be positioned at least partially within the pocket (4) so formed and to receive a second user action (92) to generate a second signal (14) corresponding to the second user action (92);
- the processor (20) of the interaction unit (10) is configured to receive the second signal (14) from the second interaction element (13) and to generate consequently a second request (22);
- the wireless communication interface (15) of the interaction unit (10) is configured to transmit the second request (22);
- the communication component (32) of the base station (30) is configured to receive the second request (22);
- the processor component (40) of the base station (30) is configured to generate a second command (42) corresponding to the second request (22); and
- the communication mechanism (32) is configured to communicate the second command (42) to the target device (5); wherein the second command (42) is instructive of performance of requesting, receiving and storing of desired data from the target device (5) into the data storage element (18) of the interaction unit (10).

14. The system (1) according to any of claims 1 to 13 wherein the first interaction element (11) is configured to receive the first user action (91) emulating one or more pulls on the first interaction element (11) in a direction towards outside of the pocket (4).

15. The system (1) according to claim 14 wherein the first interaction element (11) is configured to receive the second user action (92) emulating one or more pull on the first interaction element (11) in a direction towards outside of the pocket (4), and wherein the first interaction element (11) is configured such that a number of pulls on the first interaction element (11) to generate the first signal (12) is different from a number of pulls on the first interaction element (11) to generate the second signal (14).
